Europäisches Patentamt

**European Patent Office**

**Office européen des brevets**

(11) Numéro de publication: **0 157 705**
**A1**

(12) # DEMANDE DE BREVET EUROPEEN

(21) Numéro de dépôt: 85400639.2

(22) Date de dépôt: 01.04.85

(51) Int. Cl.⁴: **A 01 K 79/00**

(30) Priorité: 05.04.84 FR 8405352

(43) Date de publication de la demande: 09.10.85
Bulletin 85/41

(84) Etats contractants désignés: AT BE CH DE GB IT LI NL
SE

(71) Demandeur: Chureau, Bernard, 9 rue du Fan, F-44420 La
Turballe (FR)

(72) Inventeur: Chureau, Bernard, 9 rue du Fan, F-44420 La
Turballe (FR)

(74) Mandataire: Lemonnier, André, 4 Boulevard Saint-Denis,
F-75010 Paris (FR)

(54) Machine à boetter pour la pêche à la palangre utilisant des poissons entiers.

(57) Cette machine combine un guide (18-19-20) connu pour
le guidage de la pointe (1) des hameçons, un couloir (25)
d'introduction du poisson appât qui est perpendiculaire à la
trajectoire (23) de la pointe de l'hameçon, une paroi éclipsable (29) prolongeant la paroi (26) du couloir du côté aval de
la trajectoire de l'hameçon et une seconde paroi (30) perpendiculaire à la première, cette seconde paroi se prolongeant
par un bras (31) accrochable par l'hameçon pour faire pivoter la paroi éclipsable autour d'un axe de pivotement (33)
situé vers le couloir et vers l'aval par rapport à la trajectoire
de l'hameçon et une rampe oblique (28) repoussant la tête de
l'appât introduit selon la direction longitudinale (F) du couloir vers la seconde paroi (30) de la paroi éclipsable.
La machine est utilisable pour la pêche à la palangre.

1

## Machine à boetter pour la pêche à la palangre utilisant des poissons entiers.

La palangre est une ligne dormante pour la pêche en mer qui est formée d'une ligne maitresse sur laquelle sont fixés de place en place des avançons portant à leur autre extrémité chacun un hameçon. Une ligne maitresse a une longueur de plusieurs centaines de mètres et chaque palangre porte une centaine d'hameçons, l'écartement moyen se situant entre trois et cinq mètres avec des avançons de un mètre à un mètre cinquante de long. Par bon temps on estime que la vitesse moyenne de filage d'une palangre est d'un hameçon toutes les deux secondes, ce qui interdit de boetter, c'est-à-dire de fixer l'appât sur l'hameçon, au coup par coup et à la main. Dans la pratique donc la palangre est boettée à l'avance et stockée, en général dans une caisse, avec les hameçons boettés rangés côte à côte.

On a déjà proposé diverses machines à boetter automatiquement utilisant comme appât des morceaux de poissons éventuellement des filets, la plus perfectionnée étant décrite dans la demande de brevet française FR-A-2.545.322 déposée le 4 Mai 1983 au nom du demandeur pour "Machine à boetter pour la pêche à la palangre".

Pour certaines pêches à la palangre, notamment la pêche du merlu, le boettage s'effectue avec des poissons entiers, en général des sardines voire des maquereaux. Les dispositifs d'accrochage de l'appât au hasard comme dans certaines machines automatiques antérieures ou avec une fourchette de présentation de l'appât comme dans la demande ci-dessus rappelée, ne sont pas utilisables avec des poissons entiers. En outre la qualité pêchante des appâts constitués par des poissons entiers est très étroitement fonction du mode d'accrochage de l'appât. Dans le cas où l'hameçon traverse transversalement le corps en dessous d'une nageoire dorsale, le poisson forme hélice et vrille le bas de ligne sous l'action des courants. Si l'hameçon est accroché dans la gueule du poisson, on évite l'inconvénient ci-dessus mais les lèvres étant relativement fragiles, on risque un décrochage par arrachement. Le meilleur accrochage engage la pointe de l'hameçon dans le crâne, la pointe ressortant dans la cavité buccale. Celui-ci doit toutefois être réalisé avec précision pour engager la pointe de l'hameçon dans la zone relativement molle au sommet de la boîte cranienne du poisson. En outre le poisson est relativement fragile et on ne peut dégager le poisson à force de l'organe de guidage qui l'a présenté à la pointe de l'hameçon.

La présente invention a pour but de réaliser une machine à boetter les palangres utilisant des poissons entiers qui ne présente pas les inconvénients des machines antérieures et assure un accrochage répondant aux conditions ci-dessus exposées. La présente invention met à profit le fait que les lots de poissons utilisés comme appât au cours du filage d'une palangre sont sensiblement du même calibre ce qui permet de ne pas modifier les réglages de la machine.

La machine à boetter les palangres avec des poissons entiers conforme à l'invention qui combine un guide de type connu pour le guidage de la pointe des hameçons selon une trajectoire rectiligne, la pointe de l'hameçon faisant saillie par rapport au guide, un couloir d'introduction du poisson appât qui est perpendiculaire à la trajectoire de la pointe de l'hameçon, une porte éclipsable comportant au moins une première paroi prolongeant sensiblement la paroi du couloir située du côté aval de la trajectoire de l'hameçon,est caractérisée en ce que la porte éclipsable comporte une seconde paroi perpendiculaire à la première et raccordée à celle-ci le long du bord de cette première paroi qui se trouve vers le guide de l'hameçon, cette seconde paroi se prolongeant par un bras accrochable par l'hameçon pour faire pivoter la porte éclipsable autour d'un axe de pivotement situé vers le couloir et vers l'aval par rapport à la trajectoire de l'hameçon et une rampe oblique repoussant la tête de l'appât introduit selon la direction longitudinale du couloir vers la seconde paroi qui se trouve sur la trajectoire de la courbure de l'hameçon, de la porte éclipsable.

Les poissons sont introduits dans le couloir avec le ventre vers l'aval de la trajectoire de l'hameçon et la tête en avant de sorte qu'ils présentent le crâne à la pointe de l'hameçon. La rampe oblique applique la tête contre la deuxième paroi de la porte éclipsable, le nez venant se loger dans le dièdre aigu formé entre la rampe et la deuxième paroi de sorte que la zone molle de la boîte cranienne se trouve sur la trajectoire de la pointe de l'hameçon. Après s'être enfoncé dans la boîte cranienne l'hameçon accroche le bras et fait pivoter la porte éclipsable en même temps que le poisson glisse contre la première paroi de la porte éclipsable après avoir été rapidement dégagé de la rampe oblique pour se mettre en ligne avec l'avançon. Lorsque l'hameçon quitte le bras pivotant l'ensemconstitué par ce bras et la porte éclipsable revient en position,le poisson se trouvant dégagé de la porte éclipsable.

Selon une autre caractéristique l'hameçon est guidé pointe en bas, le guide comportant un positionneur d'hameçon à rampes suivi par un canal tubulaire guidant la hampe de l'hameçon avec sa courbure et sa pointe passant dans une fente longitudinale à la partie inférieure du canal tubulaire et l'hameçon étant tiré par l'avançon, qui passe dans une fente longitudinale à la partie supérieure du canal tubulaire, et la ligne maîtresse.

Selon une autre caractéristique la porte éclipsable a une section en U et forme guidage pour la partie ventrale du poisson.

Selon une autre caractéristique la rampe oblique est constituée par une cale en coin qui est réglable en position selon la direction de l'axe du couloir pour permettre un réglage en fonction de la taille des poissons du lot.

Selon encore une autre caractéristique l'axe de pivotement de l'ensemble constitué par la porte éclipsable et le bras est déporté vers l'aval et écarté de la trajectoire de l'hameçon,ce qui assure un plus grand rayon pour la trajectoire du point d'appui de l'hameçon donc une vitesse angulaire de rotation plus faible dans la partie initiale, le glissement de l'hameçon sur le bord d'accrochage de l'ensemble deuxième paroi-bras, donc du poisson dans le guide constitué par la porte éclipsable,ne se produisant que lorsque l'hameçon a atteint la position symétrique, le poisson ayant déjà notablement pivoté pour se mettre en ligne avec l'avançon.

Selon encore une autre caractéristique l'avancée des poissons dans le couloir et l'alimentation en poissons se font par des transporteurs dont l'avance est asservie au passage d'un hameçon. Cet asservissement peut être assuré mécaniquement par des cabestans accrochés par l'hameçon ou par le mouvement de l'ensemble bras-porte éclipsable ou par des moteurs asservis à des détecteurs de passage de l'hameçon.

5

0157705

L'invention sera décrite plus en détail ci-après sous forme d'un exemple de réalisation avec référence aux dessins ci-annexés dans lesquels :

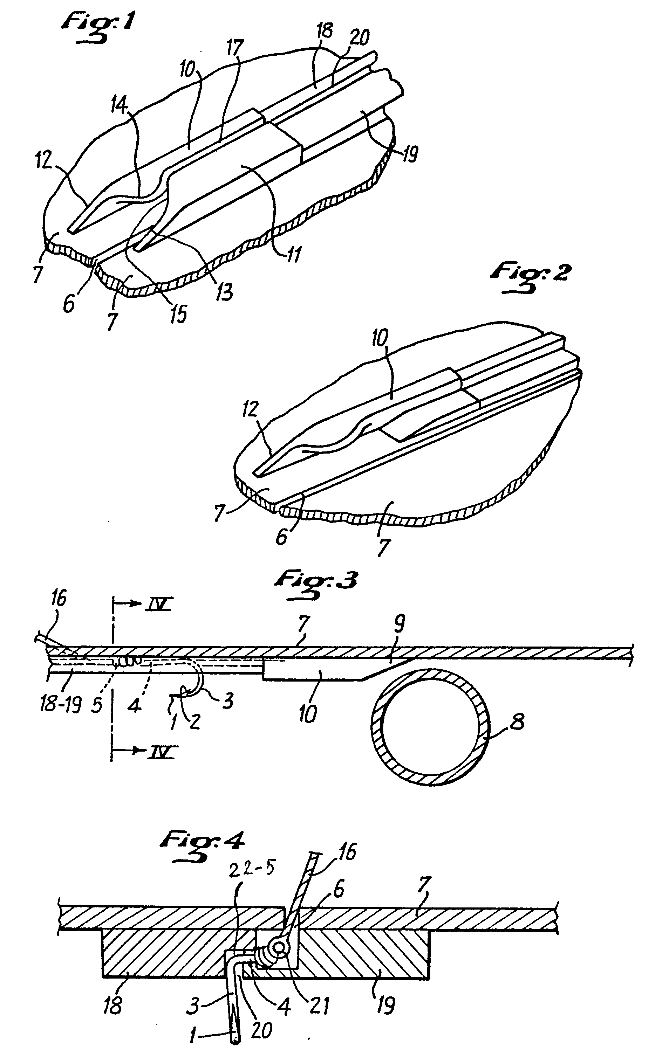

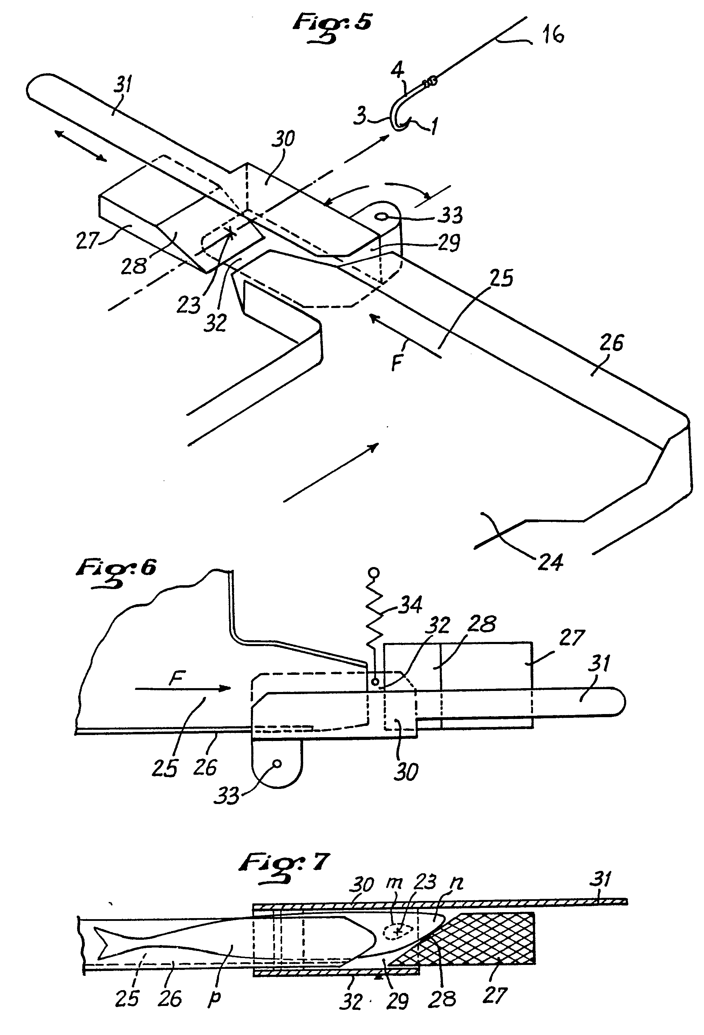

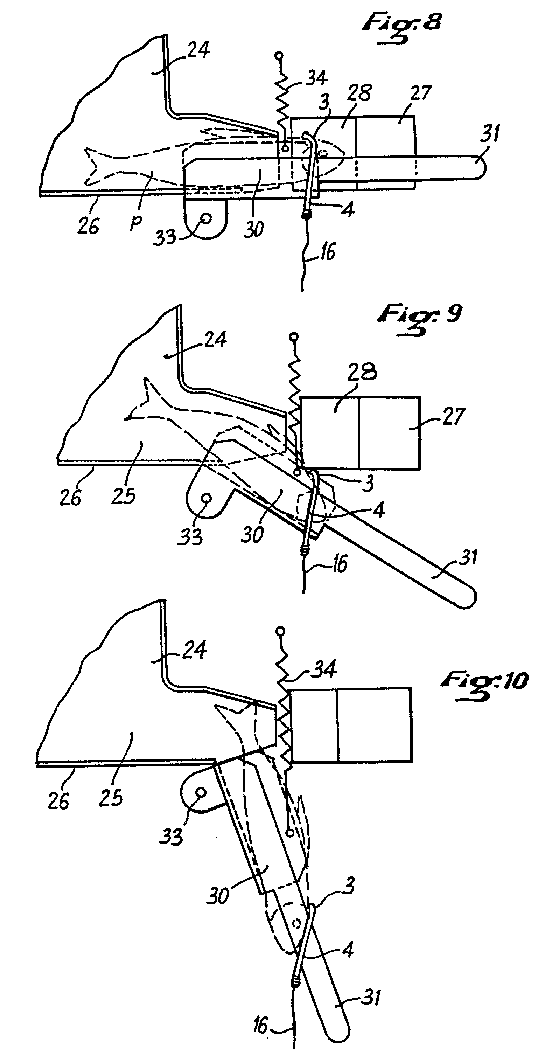

La figure 1 est une vue en perspective par dessous de la partie d'engagement du rail de guidage de l'hameçon; la figure 2 en est une vue partielle, un des éléments étant supprimé ; la figure 3 en est une vue en élévation latérale et la figure 4 une vue en coupe à plus grande échelle par IV-IV de figure 3; la figure 5 est une vue en perspective schématique du dispositif boetteur; la figure 6 en est une vue en plan; la figure 7 une vue en coupe par VII-VII de figure 6 et les figures 8 à 10 des vues en plan correspondant à la figure 5 à diverses étapes du dégagement du poisson.

On décrira tout d'abord avec références aux figures 1 à 4 le dispositif de guidage de l'hameçon pointe en bas dans la machine à boetter. La machine est conçue pour fonctionner de préférence avec des hameçons dits renversés dans lesquels la pointe 1, l'ardillon 2 et la courbure 3 se trouvent dans un plan dévié par rapport à la hampe 4 et à l'anneau ou à la palette 5 (voir figures 3 et 4). Sous une fente 6 réalisée dans un plateau 7 formant couvercle supérieur de la machine à boetter est monté un tube transversal 8 de gros diamètre sur lequel la pointe de l'hameçon se trouve rejetée vers la droite ou vers la gauche. Au dessus de ce tube se trouvent les pointes 9 des deux nez de rails 10 et 11 de la glissière de guidage. Ces nez comportent une rampe 12, 13 qui redresse la pointe 1 de l'hameçon pour la faire pointer vers le bas et la courbure 3 coopère, selon que l'hameçon a été rejeté vers la gauche ou la droite, avec des cames d'engagement 14-15 qui font tourner le plan de la courbure autour de la hampe 4 qui est tirée vers la face inférieure de la table 7 par l'avançon 16 engagé dans la fente 6, la ligne maîtresse s'écartant progressivement de la

6 0157705

table 7 pour tendre en oblique les avançons (Fig. 3). L'hameçon est ainsi engagé avec le plan de sa courbure 3 passant dans une fente 17. Les nez de rails 10, 11 se prolongent sous la table 7 par des rails 18-19 de hauteur réduite pour dégager la pointe et la courbure de l'hameçon (Fig. 3) avec entre eux une fente 20 qui prolonge la fente 17, un canal 21 en communication avec la fente 6 (Fig. 4) pour le passage de l'anneau 5 et du noeud d'amarrage à l'avançon, le canal 21 étant réuni à la fente 20 par une fente horizontale 22 dans laquelle circule la hampe 4.

La pointe de l'hameçon suit ainsi une trajectoire représentée par l'axe 23 en dessous de la table 7 qui n'est pas représentée sur les dessins.

L'appareil à boetter comporte un plateau 24 placé sous le niveau de la table 7 de manière que l'axe 23 se trouve à une distance de préférence réglable d'environ 8 à 10 millimètres au-dessus du plan du plateau qui se prolonge par un couloir 25 perpendiculaire à l'axe 23. Ce couloir 25 est délimité vers l'aval, dans le sens de circulation de l'hameçon, par une paroi verticale 26. Les poissons p placés à plat sur le plateau 24 sont engagés dans le couloir 25 avec la partie ventrale en appui contre la paroi 26 selon la direction de la flèche F.

En face de la sortie du couloir et de l'autre côté par rapport à l'axe 23 est montée une cale réglable 27 qui présente du côté du couloir un plan incliné 28.

La paroi 26 est prolongée par un canal de guidage constitué par une paroi 29 parallèle à la paroi 26, vers l'aval et à proximité immédiate de celle-ci, par une paroi supérieure 30 parallèle au plateau 24 et passant au-dessus de la face supérieure de la cale 27, cette paroi se prolongeant par un bras 31 et une paroi inférieure 32 parallèle à la paroi 30 et située en dessous du plan du plateau 24. Le canal de guidage 29-30-32 et le bras 31 sont montés à rotation autour d'un axe 33 qui est déporté vers l'aval de la paroi 26 et écarté de l'axe 23 d'environ la moitié de la longueur du poisson p. L'ensemble est sollicité vers la position dans le prolongement du canal 25 par un ressort 34.

Comme illustré dans la figure 6 le nez n du poisson p avancé selon la flèche F dans le couloir 25 s'engage le long de la rampe inclinée 28 de la cale 27 en s'appuyant sous la plaque 30. La zone molle m de la boîte cranienne se trouve alors coupée par l'axe 23.

Lorsque la pointe de l'hameçon arrive au droit du dispositif, elle pénêtre dans la zone m de la boîte cranienne (Fig. 8) et l'avançon 16 et l'hameçon exercent par le poisson p une force sur l'ensemble mobile comprenant le canal de guidage et le bras 31. L'ensemble pivote autour de l'axe 33 en bandant le ressort 34 (Fig. 9). Le poisson a alors pivoté autour de l'axe 33 et la rotation se poursuivant (Fig. 10), la courbure 3 de l'hameçon vient au contact du bord du bras 31 et le poisson commence à glisser hors du canal de guidage 29-30-32.

Le dispositif ménage donc l'appât qui n'est pas soumis à une traction brutale, l'hameçon pénétrant dans la boîte cranienne et venant par sa courbure prendre appui sur le bras mobile 31 pour assurer le mouvement.

0157705

Revendications

1. Une machine à boetter pour la pêche à la palangre utilisant des poissons entiers combinant un guide (18-19-20) de type connu pour le guidage de la pointe (1) des hameçons selon une trajectoire rectiligne (23), la pointe de l'hameçon faisant saillie par rapport au guide, un couloir (25) d'introduction du poisson appât qui est perpendiculaire à la trajectoire (23) de la pointe de l'hameçon, une porte éclipsable comportant au moins une première paroi (29) prolongeant sensiblement la paroi (26) du couloir située du côté aval de la trajectoire de l'hameçon, caractérisée en ce que la porte éclipsable comporte une seconde paroi (30) perpendiculaire à la première et raccordée à celle-ci le long du bord de cette première paroi qui se trouve vers le guide de l'hameçon, cette seconde paroi se prolongeant par un bras (31) accrochable par l'hameçon pour faire pivoter la porte éclipsable autour d'un axe de pivotement (33) situé vers le couloir et vers l'aval par rapport à la trajectoire de l'hameçon et une rampe oblique (28) repoussant la tête de l'appât (p) introduit selon la direction longitudinale (F) du couloir vers la seconde paroi (30) qui se trouve sur la trajectoire de la courbure de l'hameçon, de la porte éclipsable.

2. Une machine à boetter selon la revendication 1, caractérisée en ce que l'hameçon est guidé pointe en bas, le guide comportant un positionneur d'hameçon à rampes (12-13-14-15) suivi par un canal tubulaire (21) guidant la hampe (4) de l'hameçon avec sa courbure et sa pointe passant dans une fente longitudinale (20) à la partie inférieure du canal tubulaire et l'hameçon étant tiré par l'avançon (16), qui passe dans une fente longitudinale (6) à la partie supérieure du canal tubulaire (21), et la ligne maîtresse.

3. Une machine à boetter selon l'une quelconque des revendications 1 et 2,
caractérisée en ce que la porte éclipsable (29-30-32) a une section en U et forme guidage pour la partie ventrale du pois-son.

2        0157705

4. Une machine à boetter selon l'une quelconque des revendications 1 à 3,
caractérisée en ce que la rampe oblique est constituée par une cale en coin (27-28) qui est réglable en position selon la direction de l'axe (F) du couloir (25) pour permettre un réglage en fonction de la taille des poissons du lot.

5. Une machine à boetter selon l'une quelconque des revendications 1 à 4,
caractérisée en ce que l'axe (33) de pivotement de l'ensemble constitué par la porte éclipsable (29-30-32) et le bras (31) est déporté vers l'aval et écarté de la trajectoire (23) de l'hameçon.

6. Une machine à boetter selon l'une quelconque des revendications 1 à 5,
caractérisée en ce que l'avancée des poissons dans le couloir et l'alimentation en poissons se font par des transporteurs dont l'avance est asservie au passage d'un hameçon.

0157705

Fig:1

Fig:2

Fig:3

Fig:4

Fig. 5

Fig. 6

Fig. 7

Fig.8

Fig.9

Fig.10

Office européen
des brevets

**RAPPORT DE RECHERCHE EUROPEENNE**

0157705

Numéro de la demande

EP 85 40 0639

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 069 801 (ELLWORTHY) <br> * Page 3, ligne 85 - page 4, ligne 57; figures 1,2,3 * <br><br> --- | 1,2,6 | A 01 K 79/00 |
| A | US-A-3 997 996 (NYGAARD) <br><br> --- | | |
| A | GB-A-2 078 474 (ROBINSON AND SON LIM.) <br><br> --- | | |
| A | FR-A-1 115 902 (ANDRIST) <br><br> ----- | | |

DOMAINES TECHNIQUES
RECHERCHES (Int. Cl.4)

A 01 K

Le present rapport de recherche a été établi pour toutes les revendications

| Lieu de la recherche | Date d'achèvement de la recherche | Examinateur |
|---|---|---|
| LA HAYE | 28-05-1985 | VERDOODT S.J.M. |